(19) Europäisches Patentamt

European Patent Office

Office européen des brevets

(11) **EP 1 548 465 A1**

(12) **EUROPEAN PATENT APPLICATION**

(43) Date of publication:
**29.06.2005 Bulletin 2005/26**

(51) Int Cl.$^7$: **G01T 1/24**

(21) Application number: **04090513.5**

(22) Date of filing: **23.12.2004**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **26.12.2003 JP 2003433779**

(71) Applicant: **Riken
Wako-shi, Saitama 351-0198 (JP)**

(72) Inventors:
• **Gono, Yasuyuki
Wako-shi Saitama 351-0198 (JP)**

• **Motomura, Shinji
Wako-shi Saitama 351-0198 (JP)**
• **Enomoto, Shuichi
Wako-shi Saitama 351-0198 (JP)**
• **Yano, Yasushige
Wako-shi Saitama 351-0198 (JP)**

(74) Representative:
**Ziebig, Marlene, Dr. Dipl.-Chem. et al
Anwaltskanzlei
Gulde Hengelhaupt Ziebig & Schneider
Wallstrasse 58/59
10179 Berlin (DE)**

(54) **Gamma-ray detector and gamma-ray image pick-up apparatus**

(57) Disclosed is a gamma-ray image pickup apparatus having high energy resolution and high position resolution. A Compton camera is constructed by arranging two electrode split planar germanium semiconductor detectors in front and behind. This Compton camera processes a detection signal obtained from an anode and a cathode of the planar electrode split germanium detector, and can measure at how deep position from the detector surface the interaction of a gamma ray occurs. Moreover, with regard to the direction parallel to the electrode surface of the detector, the interaction position of the gamma ray was able to be measured with high accuracy. Accordingly, spatial resolution is improved by resolving a formula for the kinematics of Compton scattering with excellent accuracy.

FIG. 1

## Description

FIELD OF THE INVENTION

The present invention relates to a gamma-ray detector and a gamma-ray image pickup apparatus that detects the distribution of a gamma-ray source using the detector and can display an image.

BACKGROUND OF THE INVENTION

PET (positron emission tomography) and SPECT (single photon emission computed tomography) are applied to diagnostic apparatuses for conventional nuclear medicine. The PET allows two gamma rays of 511 keV emitted at an angle of 180 degrees to be detected using a positron emission nuclide when an emitted positron and an electron in substance are met each other and extinguish, and a distributed image of the nuclide to be obtained (Non-patent document 1). The SPECT allows a collimator to be installed between a position sensitive detector and a sample in order to determine the direction of flight of a gamma ray (Non-patent document 2). On the other hand, in cosmic ray astronomy, a Compton telescope was developed as an apparatus for measuring the celestial position of a gamma-ray source (Non-patent document 3). Because this apparatus utilizes kinematics of Compton scattering of the gamma ray, the direction of flight of the gamma ray can be determined without using the collimator. Later, an electronically collimated gamma camera for the SPECT was developed by utilizing the principle of this apparatus (Non-patent document 4).

[Non-patent document 1] S. Rankowitz et al., "Positron scanner for locating brain tumors," IRE Int Conv Rec 1962; 10 (Issue 9): pp. 49 to 56.
[Non-patent document 2] D. E. Kuhl and R. Q. Edwards, "Image Separation Radioisotope Scanning, " Radiology, Vol. 80, pp. 653 to 662, 1963.
[Non-patent document 3] V. Schonfelder et al., "A Telescope for Soft Gamma Ray Astronomy, " Nucl. Instr. Meth., Vpl. 107, pp. 385 to 394, 1973.
[Non-patent document 4] M. Singh, "An electrically collimated gamma camera for single photon emission computed tomography, Part I: Theoretical considerations and design criteria, "Med. Phys. 10, (1983) pp. 421 to 427.

SUMMARY OF THE INVENTION

PET can enhance an image of each nuclide utilizing a difference in the life of the nuclide, but cannot obtain distributed images of multiple nuclides at the same time. Because SPECT allows a collimator to be installed, detection efficiency is reduced, and even a gamma-ray image pickup apparatus also becomes heavy and bulky. Moreover, at present, the SPECT is chiefly applied to a gamma ray of 140 keV of $^{99}$Tc. However, when the energy of the gamma ray increases, the probability of Compton scattering of the gamma ray occurring in the collimator or a detector increases, and the direction of flight cannot be determined satisfactorily. A Compton telescope is, in the present circumstances, insufficient in the energy resolution and the measurement accuracy of an interactive position, and does not have performance as a diagnostic apparatus for nuclear medicine. Even an electronically collimated gamma camera for the SPECT cannot be applied to multiple nuclides.
The present invention is to provide a gamma-ray image pickup apparatus having high energy resolution and high position resolution, and a gamma-ray detector that is used for the gamma-ray image pickup apparatus.
In the present invention, a Compton camera was developed in which two planar electrode split semiconductor detectors are arranged in front and behind in parallel. The resolution of the measured energy of a gamma ray was able to be improved by employing germanium detectors in the entire gamma-ray detector portion. Accordingly, the gamma ray intrinsic to each nuclide was able to be identified, and distributed images of multiple radioactive nuclides were able to be obtained at the same time. Moreover, because an angle of Compton scattering can be determined with excellent accuracy, this characteristic contributes to also an improvement in spatial resolution. In addition to germanium, the gamma-ray detection crystal may comprise diamond (C), silicon (Si), germanium (Ge), cadmium telluride (CdTe), cadmium zinc telluride ($Cd_{1-x}Zn_xTe$), mercuric iodide ($HgI_2$), lead iodide ($PbI_2$), indium iodide (InP), gallium selenide (GaSe), cadmium selenide (CdSe), or silicon carbide (SiC), for example.
Furthermore, a detection signal obtained from the anode and cathode of a planar electrode split semiconductor detector is processed. Then with regard to the direction of thickness of the detector, that the interaction of a gamma ray occurred in what a deep position from the detector surface was able to be measured. Moreover, with regard to the direction parallel to the electrode surface of the detector, a method for measuring the interactive position of the gamma ray with high accuracy was devised. Consequently, a formula for the kinematics of Compton scattering can be resolved with excellent accuracy, and spatial resolution is improved successfully.
A gamma-ray detector according to the present invention includes a planar gamma-ray detection crystal, a strip pair detection means, and a time difference measurement means. The planar gamma-ray detection crystal provides multiple anode strips on the front in parallel, and provides multiple cathode strips on the rear in parallel that are extended in the direction intersecting, preferably crossing at right angles, with the extension direction of an anode strip. The strip pair detection means detects a pair of the anode and cathode strips nearest to the interaction point of a gamma ray incident on the planar gamma-ray detection crystal based on a signal waveform from the multiple anode and cathode strips. The time difference measuring means measures, with regard to the pair of the anode and cathode strips detected by the strip pair detection means, a difference in the time until the amplitude of a signal waveform reaches a predetermined ratio, for example, 50%, of the maximum value after an interaction occurred, and the time until the amplitude of the signal waveform of the cathode strip reaches the predetermined ratio, for example, 50%, of the maximum value after the interaction occurred. This gamma-ray detector includes a depth detection means that determines depth from the planar gamma-ray detection crystal surface at an interaction point by applying the time difference measured by the time difference measurement means to the relationship between the previously stored time difference and the depth.

A strip pair detection means pairs, for example, anode and cathode strips in which the wave height of a signal waveform exceeded a predetermined threshold over a predetermined time with the anode and cathode strips nearest to an interaction point.

The gamma-ray detector of the present invention also includes an amplitude detection means that detects the maximum amplitude $Y_+$ of the signal waveform of an anode strip next to the right of the anode strip detected by a strip pair detection means and the maximum amplitude $Y_-$ of the signal waveform of the anode strip next to the left, and detects the maximum amplitude $X_+$ of the signal waveform of a cathode strip next to the right of the cathode strip detected by a strip pair detection means, and the maximum amplitude $X_-$ of the signal waveform of the cathode strip next to the left. Then the gamma-ray detector of the present invention includes an in-plane position detection means that detects the position of an interaction point within the width of the anode strip detected by the strip pair detection means using $Y=(Y_+-Y_-)/(Y_++Y_-)$ as an index, and the position of the interaction point within the width of the cathode strip detected by the strip pair detection means using $X=(X_+-X_-)/(X_++X_-)$ as an index. The in-plane position detection means detects the position of the interaction point of the gamma ray within the width of the anode strip by applying the stored relationship between the index Y and the position of the interaction point of the gamma ray within the width of the anode strip to the obtained index Y, and the position of the interaction point of the gamma ray within the width of the cathode strip by applying the stored relationship between the index X and the position of the interaction point of the gamma ray within the width of the cathode strip to the obtained index X.

A gamma ray pickup apparatus according to the present invention includes a first gamma-ray detector having a planar gamma-ray detection crystal in which multiple first electrode strips are provided on the front in parallel, and multiple second electrode strips are provided on the rear in parallel that are extended in the direction intersecting, preferably crossing at right angles, with the extension direction of the first electrode strip. A gamma ray pickup apparatus according to the present invention also includes a second gamma-ray detector having a planar gamma-ray detection crystal in which multiple third electrode strips are provided on the front in parallel, and multiple third electrode strips are provided on the rear in parallel that are extended in the direction intersecting, preferably crossing at right angles, with the extension direction of the third electrode strip. A gamma ray pickup apparatus according to the present invention also includes a first energy detection means that outputs a signal proportional to the energy of a gamma ray incident on the first gamma-ray detector, and a second detection means that outputs the signal proportional to the energy of the gamma ray incident on the second gamma-ray detector. A gamma ray pickup apparatus according to the present invention also includes a first strip pair detection means that detects a pair of the first and second electrode strips nearest to the interaction point of the gamma ray incident on the planar gamma-ray detection crystal of the first gamma-ray detector based on a signal waveform from the multiple first and second electrode strips. A gamma ray pickup apparatus according to the present invention also includes a second strip pair detection means that detects a pair of the third and fourth electrode strips nearest to the interaction point of the gamma ray incident on the planar gamma-ray detection crystal of the second gamma-ray detector based on the signal waveform from the multiple third and fourth electrode strips. A gamma ray pickup apparatus according to the present invention also includes a time difference measuring means that measures a difference in the time until the amplitude of the signal waveform of the first electrode strip reaches a predetermined ratio, for example, 50% of the maximum value after an interaction occurred, and the time until the amplitude of the signal waveform of the second electrode strip reaches the predetermined ratio, for example, 50% of the maximum value after the interaction occurred, with regard to a pair of the first and second electrode strips of the first gamma-ray detector detected by the first strip pair detection means. A gamma ray pickup apparatus according to the present invention also includes a time difference measuring means that measures a difference in the time until the amplitude of the signal waveform of the third electrode strip reaches a predetermined ratio, for example, 50% of the maximum value after an interaction occurred, and the time until the amplitude of the signal waveform of the fourth electrode strip reaches the predetermined ratio, for example, 50% of the maximum value after the interaction occurred, with regard to a pair of the third and fourth electrode strips of the second gamma-ray detector detected by the second strip pair detection means. A gamma ray pickup apparatus according to the present invention also includes an amplitude detection means that detects the maximum amplitude $A_+$ of the signal waveform of the electrode strip next to the right of the first electrode strip of the first gamma-ray detector detected by the first strip pair detection means and the maximum amplitude $A_-$ of the signal waveform of the electrode strip next to the left. A gamma ray pickup apparatus according to the present invention also includes an amplitude detection means that detects the maximum amplitude $B_+$ of the signal waveform of the electrode strip next to the right of the second electrode strip of the first gamma-ray detector detected by the first strip pair detection means and the maximum amplitude $B_-$ of the signal waveform of the electrode strip next to the left. A gamma ray pickup apparatus according to the present invention also includes an amplitude detection means that detects the maximum amplitude $C_+$ of the signal waveform of the electrode strip next to the right of the third electrode strip of the first gamma-ray detector detected by the second strip pair detection means and the maximum amplitude $C_-$ of the signal waveform of the electrode strip next to the left. A gamma ray pickup apparatus according to the present invention also includes an amplitude detection means that detects the maximum amplitude $D_+$ of the signal waveform of the electrode strip next to the right of the fourth electrode strip of the first gamma-ray detector detected by the second strip pair detection means and the maximum amplitude $D_-$ of the signal waveform of the electrode strip next to the left.

This gamma-ray image pickup apparatus may also include a depth detection means that obtains depth from the surface of a planar gamma-ray detection crystal at the interaction point of a gamma ray in the first gamma-ray detector, based on a difference in the time until the amplitude of the signal waveform of the first electrode strip, measured by a time difference measurement means, reaches a predetermined ratio of the maximum value after an interaction occurred, and the time until the amplitude of the signal waveform of the second electrode strip, measured by a time difference measurement means, reaches the predetermined ratio of the maximum value after the interaction occurred. This gamma-ray image pickup apparatus may also include a depth detection means that obtains depth from the planar gamma-ray detection crystal surface at the interaction point of the gamma ray in the second gamma-ray detector, based on a difference in the time until the amplitude of the signal waveform of the third electrode strip, measured by a time difference measurement means, reaches a predetermined ratio of the maximum value after an interaction occurred, and the time until the amplitude of the signal waveform of the fourth electrode strip, measured by the time difference measurement means, reaches the predetermined ratio of the maximum value after the interaction occurred. The depth detection means can have a method for obtaining depth by applying a measured time difference to the relationship between a previously stored time difference and the depth.

Moreover, the gamma-ray image pickup apparatus can include an in-plane position detection means that detects the position of an interaction point within the width of a first electrode strip detected by a first strip pair detection means using $A=(A_+-A_-)/(A_++A_-)$ as an index, and detects the position of the interaction point within the width of a second electrode strip detected by the first strip pair detection means using $B=(B_+-B_-)/(B_++B_-)$ as the index. The gamma-ray image pickup apparatus can also include the in-plane position detection means that detects the position of an interaction point within the width of a third electrode strip detected by the second strip pair detection means using $C=(C_+-C_-)/(C_++C_-)$ as the index, and detects the position of the interaction point within the width of a fourth electrode strip detected by the second strip pair detection means using $D=(D_+-D_-)/(D_++D_-)$ as the index.

The gamma-ray image pickup apparatus of the present invention also includes a visualization means that arithmetically computes the direction of incidence of a gamma ray based on the kinematics of Compton scattering using the information about the energy detected by a first energy detection means, the energy detected by a second energy detection means, the interaction point of the gamma ray in the first gamma-ray detector determined by a depth detection means and an in-plane detection means, and the interaction point of the gamma ray in the second gamma-ray detector, and visualizes the distribution of a gamma-ray source based on the position of the gamma-ray source that is computed for each of multiple gamma ray incidence events. The position of the gamma-ray source may be also obtained by computing a circular cone that indicates the direction of incidence of the gamma ray based on the kinematics of the Compton scattering using the information about the energy detected by the first energy detection means, the energy detected by the second energy detection means, the interaction point of the gamma ray in the first gamma-ray detector determined by the depth detection means and the in-plane detection means, and the interaction point of the gamma ray in the second gamma-ray detector, and then determining the superimposed position of the circular cone that is computed for each of the multiple gamma ray incidence events.

According to the present invention, the spatial distribution of multiple radioactive nuclides can be visualized simultaneously with high resolution and high efficiency.

BRIEF DESCRIPTION OF THE DRAWINGS

Preferred embodiments of the present invention will be described in detail based on the followings, wherein:

Fig. 1 is a drawing showing a schematic block diagram of a detection unit of a gamma-ray image pickup apparatus according to the present invention, and a detection principle of a gamma-ray source;

Figs. 2A to 2C show a structure example of an electrode split planar germanium semiconductor detector according to the present invention;

Fig. 3 is a drawing for simulating output signals of an anode and a cathode of the electrode split planar germanium semiconductor detector;

Fig. 4 is a drawing showing a relationship between a time difference between the anode and the cathode signals and DOI (Depth of interaction), where the timing signal pulses are generated for each signal when its amplitude reaches 50% of the maximum value;

Fig. 5 is a drawing showing a measurement example of the time difference for the DOI measurement;

Fig. 6 is an explanatory drawing of a measuring method for an interaction point of the gamma ray in a crosswise position;

Fig. 7 is a drawing showing the relationship between the TOI and a parameter defined in Fig. 6;

Fig. 8 is a schematic block diagram showing an example of a signal processing unit of the gamma-ray image pickup apparatus according to the present invention;

Fig. 9 is a detailed drawing of a signal processing circuit;

Figs. 10A to 10D describe an operation principle of a CFD;

Fig. 11 is a drawing showing details of data transferred to a computer;

Fig. 12 is a flowchart of data processing on the computer;

Fig. 13 is a drawing showing the measurement example of the energy of the gamma ray emitted from multiple nuclides;

Fig. 14 is a photo of leaves of a soybean to which $^{65}$Zn was administered;

Fig. 15 is a drawing of a distributed image of the $^{65}$Zn, measured by a manufactured Compton camera;

Fig. 16 is a photo of the soybean to which $^{137}$Cs, $^{59}$Fe, and the $^{65}$Zn were administered;

Fig. 17 is a drawing of the distributed image of the $^{137}$Cs measured by the gamma-ray image pickup apparatus of the present invention;

Fig. 18 is a drawing of the distributed image of the $^{59}$Fe measured by the gamma-ray image pickup apparatus of the present invention; and

Fig. 19 is a drawing of the distributed image of the $^{65}$Zn measured by the gamma-ray image pickup apparatus of the present invention.

DETAILED DESCRIPTION OF THE PREFERRED EMBODIMENTS

The embodiments of the present invention are described below with reference to the drawings. The following examples involve the use of germanium crystal as the gamma-ray detection crystal.

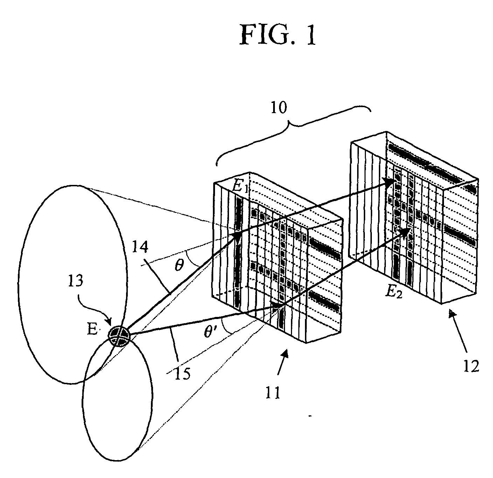

Fig. 1 is a drawing a schematic block diagram of a detection unit of a gamma-ray image pickup apparatus according to the present invention, and shows a detection principle of a gamma-ray source. This detection unit 10 includes two electrode split planar germanium semiconductor detectors 11 and 12 arranged in parallel, and measures a gamma ray emitted from the gamma-ray source located at the front. A nuclide (gamma-ray source) 13 that emits a gamma ray is assumed to exist in front of the first germanium semiconductor detector 11. The same nuclide emits gamma rays 14 and 15, having one type or multiple types of specific energy are determined. Further, in Fig. 1, the gamma rays 14 and 15 are assumed to have been incident on the detection unit 10 in a separate time.

In the present invention, a gamma ray having specific energy E is incident on the first germanium semiconductor detector 11, and Compton-scattered only once in the detector. The scattered gamma ray is incident on the second germanium semiconductor detector 12 arranged at the rear and measures a completely absorbed event. This event can be measured selectively by performing coincidence measurement through a signal processing circuit described later. Hereupon, first, the energy of the original gamma ray is known from the sum of the energy measured by the two germanium semiconductor detectors 11 and 12. Because the germanium semiconductor detector is superior to energy resolution, a nuclide can be identified using this measured energy. Subsequently, a scattering angle θ is obtained from a formula of the kinematics of the Compton scattering. Accordingly, a cone is fixed to a measurement event, and that a gamma-ray source can be found in any place on the cone is known. When many measurement events are collected, the cone crosses at the position of an actual gamma-ray source. Accordingly, the position of the gamma-ray source can be estimated. Such an apparatus is called a Compton camera.

After the illustrated gamma rays 14 and 15 are incident on the first germanium semiconductor detector 11 and Compton-scattered once there. Subsequently, the gamma rays are incident on the second germanium semiconductor detector 12, and total energy is assumed to have been lost there. This event corresponds to an event to which attention is to be paid in the present invention. At this time, for example, the gamma ray 14 provides the front first detector 11 with the energy of $E_1$, and provides the rear second detector 12 with the energy of $E_2$. Accordingly, the relationship of the following formula (1) is established.

$$E=E_1+E_2 \tag{1}$$

And, the Compton scattering angle θ is calculated from the kinematics of the Compton scattering according to the following formula (2). Where, mc is the rest mass of an electron, and c is optical velocity.

$$\cos\theta = 1 + m_c c^2 \left( \frac{1}{E} - \frac{1}{E-E_1} \right) \tag{2}$$

It is known from these relationships that the gamma-ray source 13 can be found on a circular cone whose vertex angle is 2 θ to a straight line that connects an interaction point at which the gamma ray 14 caused Compton scattering in the first germanium semiconductor detector 11 and an interaction point at which the scattered gamma ray was absorbed by the second germanium semiconductor detector 12. Accordingly, two or more sets of such events are measured, and circular cones are formed to each combination. When a position at which these circular cones are superimposed is obtained, the position is a candidate of the position at which the gamma-ray source 13 can be found. As the measured number of events, that is, the number of circular cones increases, the position at which a gamma-ray source can be found can be obtained with high accuracy.

As known from the aforementioned description, an image of a gamma ray emission body is formed by detecting positions of the gamma ray emission body individually as a set of many gamma-ray sources and superimposing them. For this purpose, the interaction point of a gamma ray in a germanium semiconductor detector must be specified with high accuracy. Subsequently, the structure of an electrode split planar germanium semiconductor detector, in which the interaction point of the gamma ray can be specified with high accuracy, and a detection method for the interaction point of the gamma ray in the germanium semiconductor detector are described.

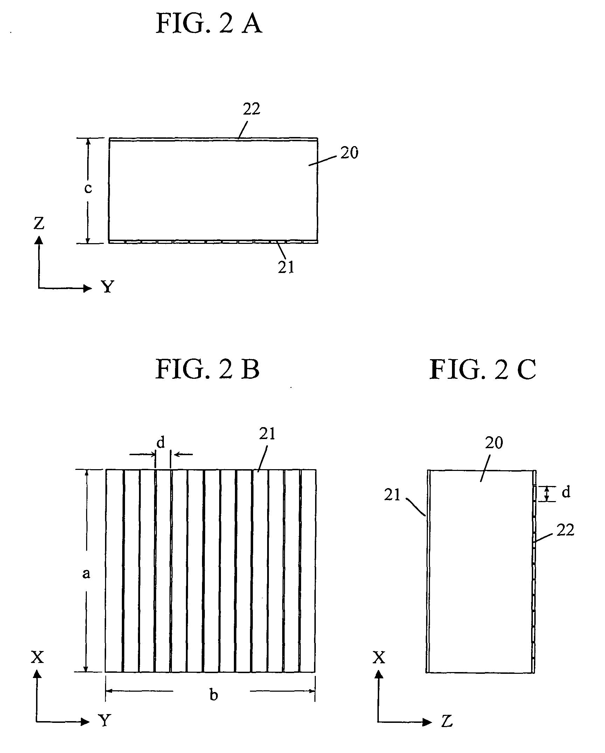

Figs. 2A to 2C show a structure example of an electrode split planar germanium semiconductor detector according to the present invention. Fig. 2A is a top view, Fig. 2B is a front view, and Fig. 2C is a side view. A system of X, Y, and Z coordinates is set as illustrated, and the details are described. This detector forms an electrode split in a rectangle on both surfaces of a planar germanium crystal 20 of dimensions a × b × c. Multiple electrode strips 22 whose width is d and length is a, and that are long and narrow in the direction of X axis are tightly arranged and formed on the one surface of the planar germanium crystal 20. Moreover, multiple electrode strips 22 whose width is d and length is b, and that are long and narrow in the direction of Y axis are tightly arranged and formed on the other surface of the planar germanium crystal 20. The electrode strip on the one surface is used as an anode (hereinafter referred to as an anode strip), and the electrode strip on the other surface is a cathode (hereinafter referred to as a cathode strip). The multiple anode strips 21 and cathode strips 22 extended in a direction that intersects mutually are provided in this manner respectively on the front and the rear of the planar germanium crystal 20. Rough X-Y coordinates of an interaction point are known from a combination of the anode and cathode strips in which a signal caused by the interaction with a gamma ray and a germanium crystal is detected strongly.

As an example, supposing a=39 mm, b=39 mm, c=20 mm, and d=3mm, the example is described below in which the electrode on the gamma ray incidence side uses an anode, and the electrode on the other side uses a cathode. First, a method for obtaining position DOI (Depth of interaction) in the depth direction from the crystal surface of the interaction point of a gamma ray inside the planar germanium crystal 20 is described.

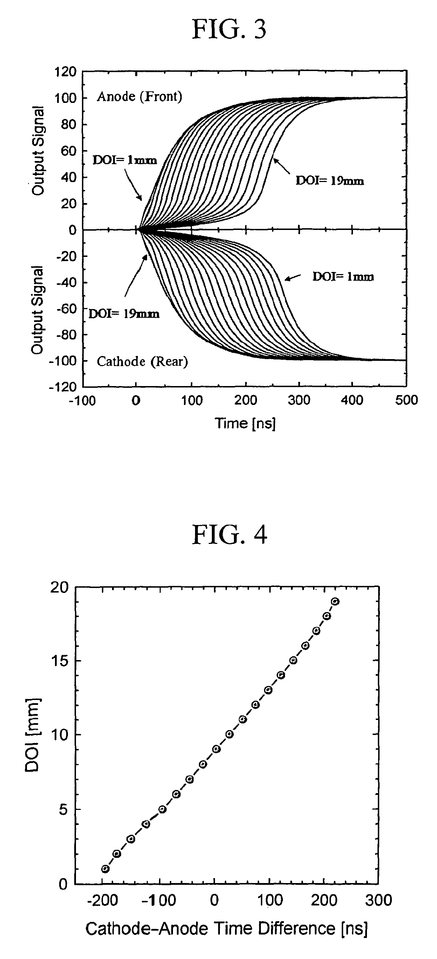

Fig. 3 is a drawing for simulating an output signal generated from anode and cathode strips when a gamma ray interacted with a germanium crystal inside an electrode split planar germanium detector. The illustrated signal is generated from the anode and cathode strips nearest to an interaction point. That a signal waveform changes according to position DOI (Depth of interaction) in the depth direction of the interaction point of the gamma ray is known. The signal waveform detected by the anode strip 21 on the gamma ray incidence side rises quickly when the DOI can be found in a shallow position from the surface of the germanium crystal incidence side and is near to the anode strip 21. As the DOI becomes deep and is far from the anode stripe, the rise timing is delayed. Adversely, the signal waveform detected by the cathode strip 22 on the rear side falls quickly when the DOI is located at a far position from the surface of the germanium crystal incidence side and is near to the cathode strip 22. As the DOI is located in a near position from the surface of the germanium crystal incidence side and is far from the cathode strip 22, the fall timing is delayed.

Fig. 4 illustrates the relationship between a difference in the time until the amplitude of a signal waveform detected by the anode strip 21 reaches 50% of the maximum value and the time until the amplitude of the signal waveform detected by the cathode strip 22, and DOI with regard to a single detection event. That this time difference and the DOI have almost a linear relationship is known. Accordingly, when the relationship of Fig. 4 is stored, and when the measured time difference is applied to the relationship of Fig. 4, the DOI, that is, the depth from the surface of a germanium crystal at an interaction point can be known.

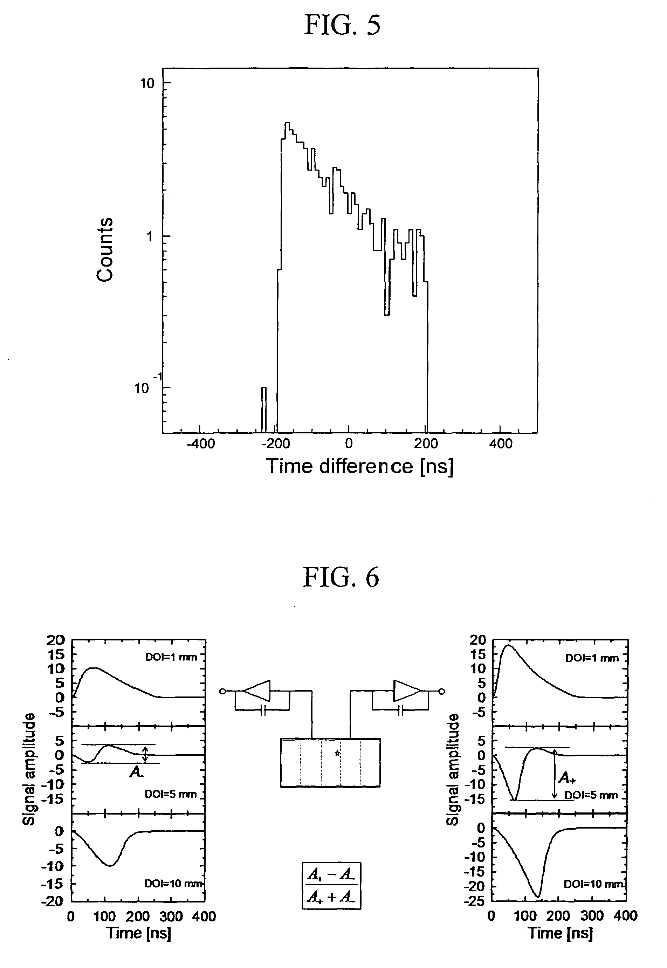

Fig. 5 is a drawing showing a measurement example of a time difference for DOI measurement. A gamma ray of 122 keV emitted from $^{152}$Eu gamma-ray source located on the front of a detector was measured. In this measurement example, when DOI is 10 mm, the time difference is 0. As the time difference is big, it means that the DOI is deep. Because the gamma ray incident on the detector is absorbed with specific probability while passing through the detector, the number of events n(z) in which the DOI is set to z can be represented as shown in the following formula (3). Where, $n_0$ is the number of incident gamma rays, and μ is quantity that depends on the energy of the gamma ray and the material of the detector, and called an attenuation coefficient.

$$n(z) \propto n_0 \exp(-\mu z) \qquad (3)$$

The attenuation coefficient μ, read from the graph of Fig. 5 proves to match the μ that corresponds to the gamma ray of 122 keV in a germanium crystal satisfactorily, and it was confirmed that this method can measure DOI correctly.

When a gamma ray interacts with a germanium crystal inside an electrode split planar germanium semiconductor detector, a signal is generated from multiple anode strips provided at the front (gamma ray incidence side) of the detector. However, the signal generated from the anode strip located nearest to an interaction point shows the maximum amplitude. Similarly, also in a signal generated from multiple cathode strips that are provided at the rear of the detector so as to intersect with the anode strip, the signal generated from the cathode strip nearest to the interaction point shows the maximum amplitude. Accordingly, the X-Y coordinates of the interaction point can be known from the position of the anode strip in which signal amplitude is maximum in the multiple anode strips, and the position of the anode strip in which the signal amplitude is maximum in the multiple cathode strips. However, because the electrode strip has width d, the X-Y coordinates of the interaction point that can be known by this method include an error of a maximum of d/2 (d = 3 mm in the illustrated example) respectively. Accordingly, in the present invention, the X-Y coordinate of the interaction point is determined with smaller accuracy than the width of the electrode strip according to the method described below.

Fig. 6 is a drawing for describing a method of measuring the crosswise position of an interaction point between a germanium crystal and a gamma ray, that is, the position within the width of an electrode strip with high accuracy. When the gamma ray interacts with the germanium crystal inside an electrode split planar germanium semiconductor detector, as described previously, a signal is detected from multiple anode strips provided at the front of the detector, and the signal generated from the anode strip nearest to the interaction point shows the maximum amplitude. Similarly, a signal is detected also from multiple cathode strips provided at the rear of the detector, but the signal generated from the cathode strip nearest to the interaction point shows the maximum amplitude.

In the present invention, attention is paid to a signal waveform that is detected by the neighboring electrode strips of an electrode strip that generates a signal having the maximum amplitude. Fig. 6 is a drawing showing the signal waveform detected by the neighboring electrode strips of the electrode strip that shows the maximum signal amplitude. The graph on the left of Fig. 6 shows the signal waveform of the electrode strip next to the left of the electrode strip that shows the maximum signal amplitude, and the graph on the right shows the signal waveform of the electrode strip next to the right of the electrode strip that shows the maximum signal amplitude. Fig. 6 is a drawing for simulating the signal waveform when DOI=1 mm, 5 mm, and 10 mm from the top respectively. A TOI (Transverse position of interaction) from the center line of the electrode strip of 3 mm wide at an interaction point is all equal and 1 mm. When the maximum amplitude of the signal waveform of the electrode next to the right is $A_+$, and the maximum amplitude of the signal waveform of the electrode strip next to the left is $A_-$, parameter L represented by the following formula is calculated.

$$L = \frac{A_+ - A_-}{A_+ + A_-} \qquad (4)$$

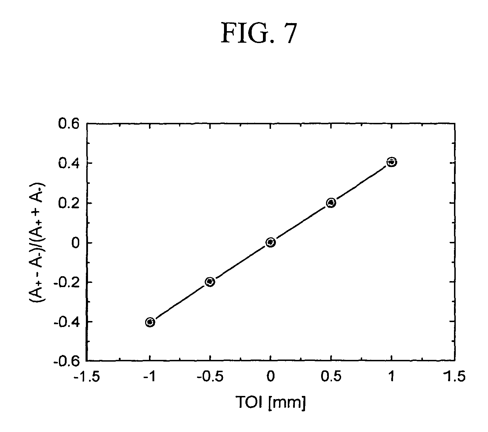

Fig. 7 is a drawing showing the relationship between TOI and the parameter L defined by the above formula (4). As illustrated, the TOI and the parameter L have almost a linear relationship. Accordingly, when the relationship of Fig. 7 is stored, and the parameter L that is calculated based on the amplitude $A_+$ or $A_-$ measured from the signal waveform of the neighboring electrode strips of an electrode strip that shows the maximum signal amplitude is applied to the relationship of Fig. 7, the TOI, that is, the position of the interaction point of a gamma ray within the width d of the electrode can be known with high accuracy. When this operation is performed with regard to the long and narrow anode strip 21 in the direction of X axis, the Y coordinate position of the interaction point can be obtained with high accuracy. Moreover, when this operation is performed with regard to the long and narrow cathode strip 22 in the direction of Y axis, the X coordinate position of the interaction point can be obtained with high accuracy.

Whether a strip nearest to an interaction point or the neighboring strips are assumed can be identified using a difference in the signal waveform obtained from their strips. The signal of the strip nearest to the interaction point allows wave height to be set to $\pm100$ at 500 ns, for example, in Fig. 3, while the signal from the neighboring strips allows the wave height to be set to 0 at 300 ns, for example, in Fig. 6. Accordingly, when a wave discriminator for identifying the difference of this waveform is manufactured and applied, both the strips can be identified, and that a strip (DOI strip) for detecting DOI, or a strip (TOI strip) for detecting TOI is assumed is known.

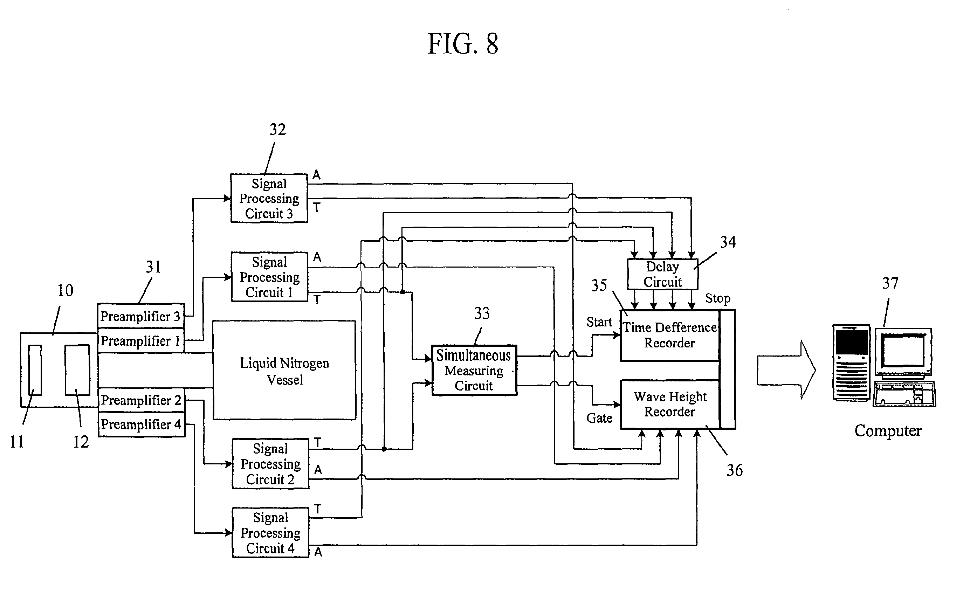

Fig. 8 is a schematic block diagram showing an example of a signal processing unit of a gamma-ray image pickup apparatus according to the present invention. The first and second germanium detectors 11 and 12 of the detection unit 10 are secured to a copper cold finger cooled with the liquid nitrogen inside a liquid nitrogen container, and cooled. A signal from the multiple anode cathode strips provided in the first detector 11 are amplified by each preamplifier. Similarly, also a signal from the multiple anode cathode strips provided in the second detector 12 are amplified by each preamplifier. Fig. 8 shows the preamplifier connected to the cathode and anode strips of the first detector 11, typified by a preamplifier 1 and a preamplifier 3 respectively, and shows the preamplifier connected to the cathode and anode strips of the second detector 12 typified by a preamplifier 2 and a preamplifier 4 respectively.

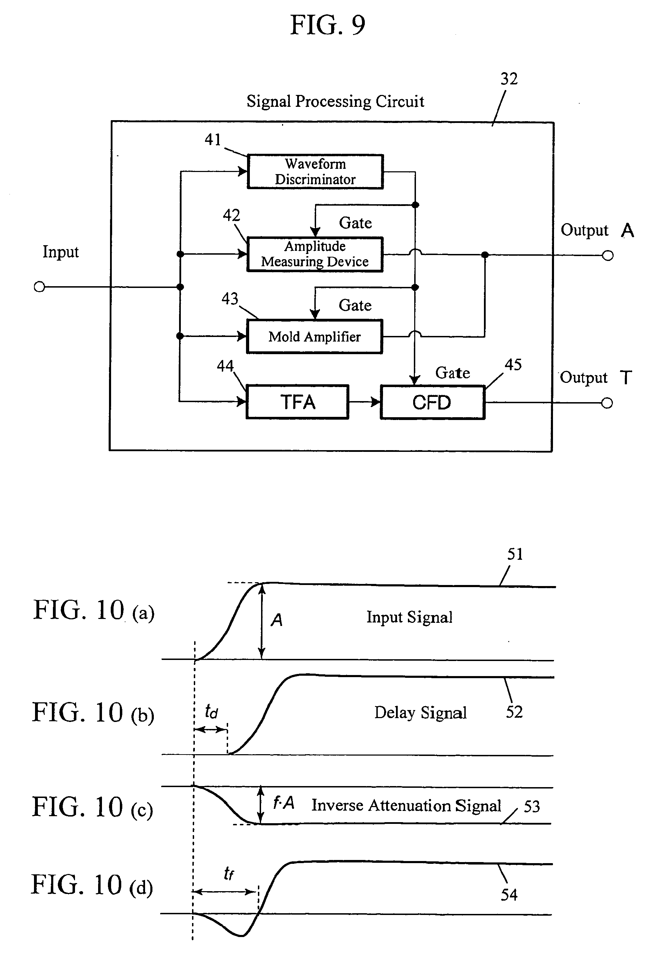

The output signal of each preamplifier is input to a signal processing circuit 32 whose details are shown in Fig. 9. This signal processing circuit 32 outputs an energy signal to output A when an input signal belongs to a DOI strip, and outputs a time signal to output T. When the input signal does not belong to the DOI strip, the signal of the output A is utilized for TOI measurement, and any signal is not output to the output T. As illustrated in Fig. 9, the signal input to the signal processing circuit 32 is divided into four signals, and is input to a waveform discriminator 41, an amplitude measuring apparatus 42, a shaping amplifier 43, and a TFA 44.

The operation of each element circuit shown in Figs. 8 and 9 is described here. A preamplifier 31 is described. The preamplifier used here is called a charge response type preamplifier, and outputs a signal having the wave height that is proportional to an amount of charge generated in a detector by the interaction of a gamma ray. The waveform discriminator 41 is set so that a gate signal may be output when the output waveform of the preamplifier 31 holds specific wave height even in 300 ns after some threshold was exceeded, and nothing may be output when not. The amplitude measuring apparatus 42 is a circuit for outputting the difference between the maximum value and the minimum value of the output of the preamplifier 31. The shaping amplifier 43 generates a semi-Gaussian waveform to output a signal having the wave height that is proportional to the wave height of the preamplifier 31 with excellent accuracy. This circuit is realized by connecting an integrated circuit of RC in multiple stages behind a differential circuit of CR. The TFA (timing filter amplifier) 44 forms a bandpass circuit. At this point, a low-pass time constant is 50 ns, and a high-pass time constant is 500 ns.

A CFD 45 is a circuit sold on the market called a constant fraction discriminator, and the operating principle is described with reference to Figs. 10A to 10D. An input signal 51 shown in Fig. 10A is divided into two signals. As shown in Fig. 10B, a signal 52 in which the input signal 51 is delayed by $t_d$, and, as shown in Fig. 10C, a signal 53 in which the signal 51 is reversed and whose amplitude is multiplied by f is generated. Subsequently, as shown in Fig. 10D, a signal 54 in which the signals 52 and 53 are added is generated. A time $t_f$ at which the wave height is set to 0 is the time at which $t_d$ is added to the time at which the wave height of the input signal 51 reaches the time multiplied by f of the maximum value. Thus, the time until the maximum value of the wave height reaches the time multiplied by f can be known by making a signal of a rising waveform or a falling waveform pass through the CDF 45.

A simultaneous measuring circuit 33 outputs a circuit for a gate signal when the time difference of an input signal is shorter than a setting value. The width and delay time of the gate signal are variable. A time difference recorder 35 is a circuit that records the time difference between a start signal and a stop signal using the gate signal output of the simultaneous measuring circuit 33 as the start signal, and using the signal in which the output T of the signal processing circuit 32 is delayed through a delay circuit 34 as the stop signal. A height recorder 36 is a circuit that records the maximum value of the wave height of the signal for the output A of the signal processing circuit 32 while the gate signal of the simultaneous measuring circuit 33 is being output.

Next, the operation of the signal processing unit shown in Figs. 8 and 9 is described. The waveform discriminator 41 checks whether an input signal belongs to a DOI strip or not. When the input signal belongs to the DOI strip, a gate signal is output, and the output signal of the amplitude measuring apparatus 42 is prevented from being output. At the same time, the output signals of the shaping amplifier 43 and the CFD 44 are assumed to be capable of being output. The amplitude measuring apparatus 42 measures and outputs the difference between the maximum value and the minimum value of the input signal when the input signal did not belong to the DOI strip. The shaping amplifier 43 generates a signal of the waveform suitable to energy measurement. The TFA 44 generates a signal of the waveform suitable to time measurement. The output of the TFA 44 is input to the CFD 45, and an output signal is generated when 50% of the maximum value of the wave height is reached.

When the signals of a signal processing circuit 1 and a signal processing circuit 2 belong to a DOI strip, respective signals of output T are input to the simultaneous measuring circuit 33. When the time difference between their input signals is shorter than a setting value, a gate signal is output from the simultaneous circuit 33, and actuates the time difference recorder 35 and the wave height recorder 36. A stop signal of the time difference recorder 35 is generated by making a signal of the output T pass through the delay circuit 34. A signal of the output A is input to the input of the wave height recorder 36.

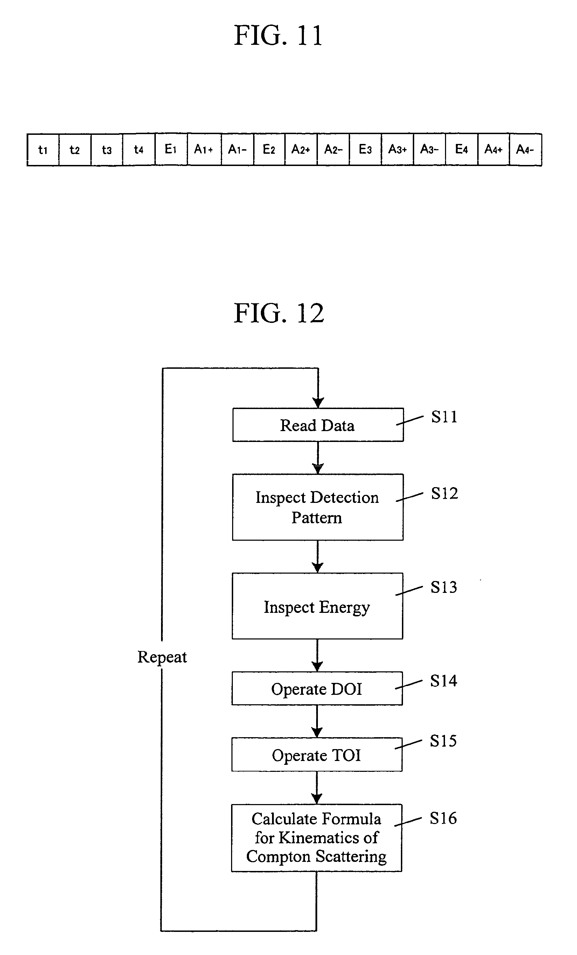

As described above, the output T of the signal processing circuit 32 is output only to a signal of a DOI strip. That is, data is generated only in a channel that corresponds to the DOI strip, of the time difference recorder 35. And, the data that corresponds to this channel, and the data of the neighboring channels among the data of the wave height recorder 36 are transferred by processing data transfer. The data of the time difference recorder 35 and the wave height recorder 36 is transferred to a computer 37 every measurement event, and processing for image generation is executed. Fig. 11 shows the details of the data to be transferred.

In Fig. 11, $t_1$ to $t_4$ are the data of the time difference recorder 35. $t_1$ and $t_3$ are the data of the cathode and anode strips of the first detector 11, and $t_2$ and $t_4$ are the data of the cathode and anode strips of the first detector 12. $E_1$ and later are the data of the wave height recorder 36. $E_1$ and $E_3$ are the DOI strip data of the cathode and anode of the first detector 11 respectively. $E_2$ and $E_4$ are the DOI strip data of the cathode and anode of the second detector 12. $A_{1+}$ and $A_{1-}$ are the data of the neighboring strips (TOI strips) of the DOI strip of the cathode of the first detector 11. $A_{2+}$ and $A_{2-}$ are the data of the neighboring strips (TOI strips) of the DOI strip of the cathode of the second detector 12. $A_{3+}$ and $A_{3-}$ are the data of the neighboring strips (TOI strips) of the DOI strip of the anode of the first detector 11. $A_{4+}$ and $A_{4-}$ are the data of the neighboring strips (TOI strips) of the anode of the second detector 12.

Fig. 12 shows a flow of data processing on the computer 37. This processing is repeated only for the number of detection events. After data is read in step 11, a detection pattern is inspected in step 12. This detection pattern is inspected based on the data of the time difference recorder 35. When data can be found in a channel to which the time difference recorder 35 belongs, the strip that formed the source of the data belongs to a DOI strip. At this point, merely when only one strip among the strips of the respective anodes and cathodes of the first and second detectors 11 and 12 belongs to the DOI strip, processing advances into the next processing. When the signals of the DOI strip are two or more, such as two gamma rays are incident on the detectors simultaneously, the event is excluded from subsequent analyzing. Next, energy is inspected in step 13. This energy is inspected using the $E_1$ and $E_2$ of the wave height recorder 36. Only when the sum of $E_1$ and $E_2$ is equal to the energy of a gamma ray, processing advances into the next processing. The DOI of step 14 is computed using the data of the time difference recorder 35. The DOI in the first detector is calculated from the difference between $t_1$ and $t_3$, and the DOI in the second detector 12 is calculated from the difference between $t_2$ and $t_4$. The TOI of a subsequent step 15 is computed using the data of the wave height recorder 36. In this case, the splitting direction of the anode is specified for the direction of X axis, and the splitting direction of the anode is specified for the direction of Y axis. The TOI in the direction of X axis of the first detector 11 is calculated from $A_{1+}$ and $A_{1-}$, and the TOI in the direction of Y axis of the first detector 1.1 is calculated from $A_{3+}$ and $A_{3-}$. Similarly, the TOI in the direction of Y axis of the second detector 12 is calculated from $A_{2+}$ and $A_{2-}$, and the TOI in the direction of X axis of the second detector 12 is calculated from $A_{4+}$ and $A_{4-}$. Thus, an interaction point is obtained between the first and second detectors 11 and 12 with high accuracy. Subsequently, processing advances into step 16, and a Compton scattering angle θ is calculated by applying the energy $E_1$ detected by the first detector 11 and the energy $E_2$ detected by the second detector 12 to the above formula (2).

Such a circular cone as shown in Fig. 1 is calculated in this manner for each event of multiple detection events, based on the information about an interaction point in the first detector 11, an interaction point in the second detector 12, and the Compton scattering angle θ. Accordingly, an event that is judged to result in a gamma ray emitted from the same nuclides is collected from the detected gamma ray energy $E(=E_1+E_2)$. The position at which the nuclide can be found can be obtained by superimposing the circular cone that belongs to the set of the event, the spatial distribution of a gamma-ray source can be displayed as an image.

When the sum of $E_1$ and $E_2$ are multiple, and multiple nuclides can be found as a gamma-ray source, a circular cone calculated based on the kinematics of Compton scattering is grouped by energy every nuclides. The position at which each nuclide can be found can be obtained separately by superimposing the circular cone for each nuclide independently.

Further, the position of a gamma-ray source can be obtained from a method disclosed in JP-A No. 357661/2002, for example, besides the method obtained from the position at which multiple circular cones described above are superimposed.

Next, an image pickup example of a gamma-ray source using the gamma-ray image pickup apparatus of the present invention is described. An example in which a soybean to which $^{137}$Cs, $^{59}$Fe, and $^{65}$Zn were administered is described here.

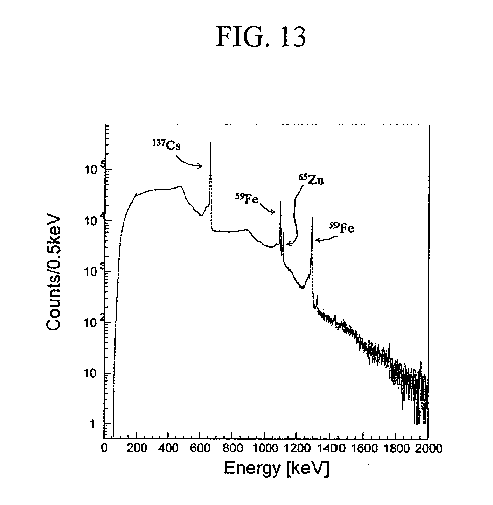

Fig. 13 is an energy spectrum generated based on the sum of the energy measured by the first and second detectors 11 and 12 that was obtained by measuring the soybean to which the $^{137}$Cs, $^{59}$Fe, and $^{65}$Zn were administered, and analyzing the data transferred to a computer using the gamma-ray image pickup apparatus of the present invention.

This energy spectrum can identify a peak of the gamma ray unique to each nuclide. Consequently, that what type of nuclide is included in measured substance is known.

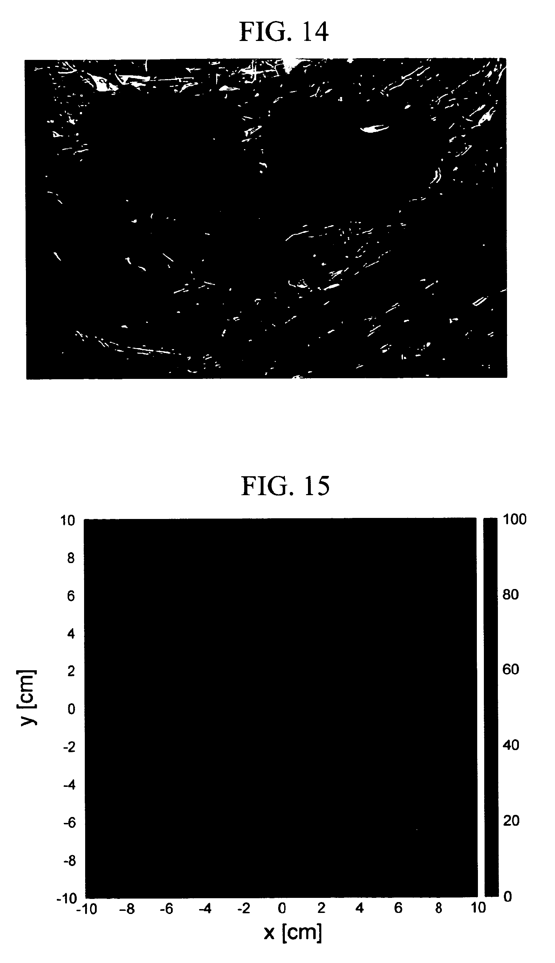

Figs. 14 to 19 show examples of actually measured images.

Fig. 14 is a photo of leaves of a soybean to which a single nuclide ($^{65}$Zn) was administered. Fig. 15 is an image showing the distribution of the $^{65}$Zn obtained by measuring the sample shown in Fig. 14 by the gamma-ray image pickup apparatus of the present invention.

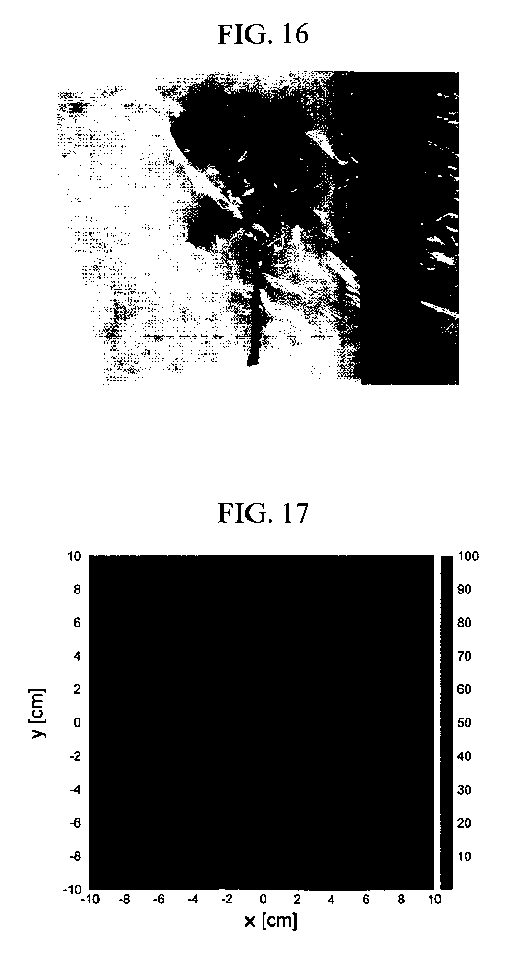

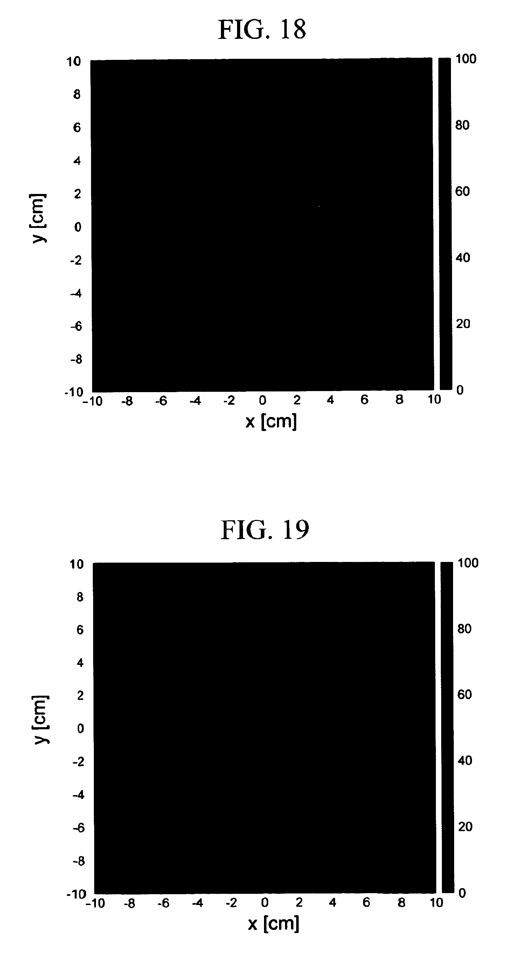

Fig. 16 is a photo of a soybean to which three types of nuclides ($^{137}$Cs, $^{59}$Fe, and $^{65}$Zn) were administered. Fig. 17 is an image showing the distribution of the $^{59}$Fe obtained by measuring the sample shown in Fig. 16 by the gamma-ray image pickup apparatus of the present invention. Fig. 18 is an image showing the distribution of the $^{59}$Fe obtained by measuring the sample shown in Fig. 16 by the gamma-ray image pickup apparatus of the present invention. Fig. 19 is an image showing the distribution of the $^{65}$Zn obtained by making measurement by the gamma-ray image pickup apparatus of the present invention. According to Figs. 17 to 19, that the three types of nuclides are distributed differently in a plant according to a nuclide can be confirmed visually.

Although in the above-described embodiments germanium crystal has been used as the gamma-ray detection crystal, the gamma-ray detection crystal that can be used in the invention is not limited to germanium crystal. For example, similar effects can be obtained by using silicone (Si) or cadmium telluride (CdTe). When a silicon detector is used as the first detector, the probability of occurrence of Compton scattering in response to a low-energy gamma ray, such as that of not more than approximately 100 keV, increases, as compared with a germanium detector. In this case, therefore, it becomes possible to perform imaging with a higher detection efficiency with respect to low-energy gamma rays. When a cadmium telluride detector is used as the second detector, the probability of occurrence of photoelectric absorption increases as compared with a germanium detector, so that it becomes possible to perform imaging with a higher detection efficiency.

**Claims**

1. A gamma-ray detector, comprising:

   a planar gamma-ray detection crystal in which multiple anode strips are provided on the front in parallel, and multiple cathode strips that are extended in the direction intersecting with the extension direction of the anode strip are provided on the rear in parallel;
   a strip pair detection means that detects a pair of anode and cathode strips nearest to an interaction point of a gamma ray incident on the planar gamma-ray detection crystal based on a signal waveform from the multiple anode and cathode strips; and
   a time difference measuring means that measures a difference in the time until the amplitude of the signal waveform of the anode strip reaches a predetermined ratio of the maximum value after an interaction occurred and the time until the amplitude of the signal waveform of the cathode strip reaches the predetermined ratio of the maximum value after the interaction occurred, with regard to the pair of the anode and cathode strips detected by the strip pair detection means.

2. The gamma-ray detector according to claim 1, further comprising a depth detection means that obtains depth from the planar gamma-ray detection crystal surface of the interaction point by applying a time difference measured by the time difference measuring means to the relationship between a previously stored time difference and the depth.

3. The gamma-ray detector according to claim 1 or 2, wherein the strip pair detection means pairs the anode and cathode strips in which the wave height of a signal waveform exceeded a predetermined threshold over a predetermined time with the anode and cathode strips nearest to the interaction point.

4. A gamma-ray detector, comprising:

   a planar gamma-ray detection crystal in which multiple anode strips are provided on the front in parallel, and multiple cathode strips that are extended in the direction intersecting with the extension direction of the anode strip are provided on the rear in parallel;
   a strip pair detection means that detects a pair of anode and cathode strips nearest to an interaction point of a gamma ray incident on the planar gamma-ray detection crystal based on a signal waveform from the multiple anode and cathode strips; and
   an amplitude detection means that detects the maximum amplitude $Y_+$ of the signal waveform of the anode strip next to the right of the anode strip detected by the strip pair detection means, the maximum amplitude

$Y_-$ of the signal waveform of the anode strip next to the left, and the maximum amplitude $X_+$ of the signal waveform of the cathode strip next to the right of the cathode strip detected by the strip pair detection means and the maximum amplitude $X_-$ of the signal waveform of the cathode strip next to the left.

**5.** The gamma-ray detector according to claim 4, further comprising an in-plane position detection means that detects the position of the interaction point within the width of the anode strip detected by the strip pair detection means using $Y=(Y_+-Y_-)/(Y_++Y_-)$ as an index, and detects the position of the interaction point within the width of the interaction point of the cathode strip detected by the strip pair detection means using $X=(X_+-X_-)/(X_++X_-)$ as an index.

**6.** The gamma-ray detector according to claim 5, wherein the in-plane position detection means detects the position of the interaction point within the width of the anode strip and the position of the interaction point within the width of the cathode strip by applying the previously stored index and the index to the relationship of the position of the interaction point of the gamma ray within the width of the anode strip.

**7.** The gamma-ray detector according to any one of claims 1 to 6, wherein the gamma-ray detection crystal is germanium crystal, diamond (C), silicon (Si), germanium (Ge), cadmium telluride (CdTe), cadmium zinc telluride ($Cd_{1-x}Zn_xTe$), mercuric iodide ($HgI_2$), lead iodide ($PbI_2$), indium iodide (InP), gallium selenide (GaSe), cadmium selenide (CdSe), or silicon carbide (SiC).

**8.** A gamma-ray image pickup apparatus, comprising:

a first gamma-ray detector that includes a planar gamma-ray detection crystal in which multiple first electrode strips are provided on the front in parallel, and multiple second electrode strips that are extended into the direction intersecting with the extension direction of the first electrode strip are provided on the rear;

a second gamma-ray detector that includes a planar gamma-ray detection crystal in which multiple third electrode strips are provided on the front in parallel, and multiple fourth electrode strips that are extended into the direction intersecting with the extension direction of the third electrode strip are provided on the rear;

a first energy detection means that outputs a signal proportional to the energy of a gamma ray incident on the first gamma-ray detector;

a second energy detection means that outputs a signal proportional to the energy of a gamma ray incident on the second gamma-ray detector;

a first strip pair detection means that detects a pair of the first and second electrode strips nearest to the interaction point of the gamma ray incident on the planar gamma-ray detection crystal of the first gamma detector based on the signal waveform from the multiple first and second electrode strips;

a second strip pair detection means that detects a pair of the third and fourth electrode strips nearest to the interaction point of the gamma ray incident on the planar gamma-ray detection crystal of the second gamma detector based on the signal waveform from the multiple third and fourth electrode strips;

a time difference measuring means that detects a difference in the time until the amplitude of the signal waveform of the first electrode strip reaches the predetermined ratio of the maximum value after an interaction occurred and the time until the amplitude of the signal waveform of the second electrode strip reaches the predetermined ratio of the maximum value after the interaction occurred, with regard to the pair of the first and second electrode strips of the first gamma-ray detector detected by the first strip pair detection means, and a difference in the time until the amplitude of the signal waveform of the third electrode strip reaches the predetermined ratio of the maximum value after an interaction occurred and the time until the amplitude of the signal waveform of the fourth electrode strip reaches the predetermined ratio of the maximum value after the interaction occurred, with regard to the pair of the third and fourth electrode strips of the second gamma-ray detector detected by the second strip pair detection means; and

an amplitude detection means that detects the maximum amplitude $A_+$ of the signal waveform of the electrode strip next to the right of the first electrode strip of the first gamma-ray detector detected by the first strip pair detection means, the maximum amplitude $A_-$ of the signal waveform of the electrode strip next to the left, the maximum amplitude $B_+$ of the signal waveform of the electrode strip next to the right of the second electrode strip of the first gamma-ray detector detected by the first strip pair detection means, the maximum amplitude $B_-$ of the signal waveform of the electrode strip next to the left, the maximum amplitude $C_+$ of the signal waveform of the electrode strip next to the right of the third electrode strip of the second gamma-ray detector detected by the second strip pair detection means, the maximum amplitude $C_-$ of the signal waveform of the electrode strip next to the left, the maximum amplitude $D_+$ of the signal waveform of the electrode strip next to the right of the fourth electrode strip of the second gamma-ray detector detected by the second strip pair detection means, and the maximum amplitude $D_-$ of the signal waveform of the electrode strip next to the left.

**9.** The gamma-ray image pickup apparatus according to claim 8, further comprising a depth detection means that detects depth from the planar gamma-ray detection crystal surface of the interaction point of the gamma ray in the first gamma-ray detector based on the difference between the time it takes for the amplitude of the signal waveform of the first electrode strip, measured by the time difference measuring means, to reach the predetermined ratio of the maximum value after an interaction occurred, and the time it takes for the amplitude of the signal waveform of the second electrode strip, measured by the time difference measuring means, to reach the predetermined ratio of the maximum value after an interaction occurred, and that detects the depth from the planar gamma-ray detection crystal surface of the interaction point of the gamma ray in the second gamma-ray detector based on the difference in the time until the amplitude of the signal waveform of the third electrode strip reaches the predetermined ratio of the maximum value after the interaction occurred, and the time until the amplitude of the signal waveform of the fourth electrode strip reaches the predetermined ratio of the maximum value after the interaction occurred.

**10.** The gamma-ray image pickup apparatus according to claim 9, wherein the depth detection means obtains depth by applying the measured time difference to the relationship between time difference and depth that is stored in advance.

**11.** The gamma-ray image pickup apparatus according to any one of claims 8 to 10, wherein the strip pair detection means pairs the electrode strip in which the wave height of the signal waveform exceeded a predetermined threshold over a predetermined time with the electrode strip nearest to the interaction point of the gamma ray.

**12.** The gamma-ray image pickup apparatus according to any one of claims 8 to 11, further comprising an in-plane position detection means that detects the position of the interaction point within the width of the first electrode strip detected by the first strip pair detection means using $A=(A_+-A_-)/(A_++A_-)$ as an index, detects the position of the interaction point within the width of the second electrode strip detected by the first strip pair detection means using $B=(B_+-B_-)/(B_++B_-)$ as an index, detects the position of the interaction point within the width of the third electrode strip detected by the second strip pair detection means using $C=(C_+-C_-)/(C_++C_-)$ as an index, and detects the position of the interaction point within the width of the fourth electrode strip detected by the second strip pair detection means using $D=(D_+-D_-)/(D_++D_-)$ as an index.

**13.** The gamma-ray image pickup apparatus according to claim 12, further comprising a visualization means that arithmetically computes the direction of incidence of a gamma ray based on the kinematics of Compton scattering using information about the energy detected by the first energy detection means, the energy detected by the second energy detection means, and the interaction point of the gamma ray in the first gamma-ray detector and the interaction point of the gamma ray in the second gamma-ray detector determined by the depth detection means and the in-plane detection means, and visualizes the distribution of a gamma-ray source based on the superimposed position of the circular cone computed to multiple gamma-ray incidence events respectively.

**14.** The gamma-ray image pickup apparatus according to claim 12, further comprising a visualization means that arithmetically computes the direction of incidence of a gamma ray based on the kinematics of Compton scattering using information about the energy detected by the first energy detection means, the energy detected by the second energy detection means, and the interaction point of the gamma ray in the first gamma-ray detector and the interaction point of the gamma ray in the second gamma-ray detector determined by the depth detection means and the in-plane detection means, and visualizes the distribution of a gamma-ray source based on the superimposed position of the circular cone computed arithmetically to multiple gamma-ray incidence events respectively.

**15.** The gamma-ray image pickup apparatus according to any one of claims 8 to 14, wherein the gamma-ray detection crystal is germanium crystal, diamond (C), silicon (Si), germanium (Ge), cadmium telluride (CdTe), cadmium zinc telluride ($Cd_{1-x}Zn_xTe$), mercuric iodide ($HgI_2$), lead iodide ($PbI_2$), indium iodide (InP), gallium selenide (GaSe), cadmium selenide (CdSe), or silicon carbide (SiC).

## FIG. 1

# FIG. 2 A

# FIG. 2 B

# FIG. 2 C

# FIG. 3

# FIG. 4

# FIG. 5

# FIG. 6

$$\left|\frac{A_+ - A_-}{A_+ + A_-}\right|$$

FIG. 7

# FIG. 8

# FIG. 9

Signal Processing Circuit

32

41 → Waveform Discriminator

42 → Amplitude Measuring Device

Gate

43 → Mold Amplifier

Gate

Input

44 → TFA → CFD ← Gate

45

Output A

Output T

FIG. 10 (a) — Input Signal

A

51

FIG. 10 (b) — Delay Signal

$t_d$

52

FIG. 10 (c) — Inverse Attenuation Signal

$f \cdot A$

53

FIG. 10 (d)

$t_f$

54

# FIG. 11

| t1 | t2 | t3 | t4 | E1 | A1+ | A1- | E2 | A2+ | A2- | E3 | A3+ | A3- | E4 | A4+ | A4- |

# FIG. 12

Read Data — S11

Inspect Detection Pattern — S12

Inspect Energy — S13

Operate DOI — S14

Operate TOI — S15

Calculate Formula for Kinematics of Compton Scattering — S16

Repeat

# FIG. 13

FIG. 14

FIG. 15

# FIG. 16

# FIG. 17

## FIG. 18

## FIG. 19

**EP 1 548 465 A1**

**European Patent Office**

**EUROPEAN SEARCH REPORT**

Application Number

EP 04 09 0513

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | KURFESS J D ET AL: "Development and applications of position-sensitive solid-state gamma ray detectors" NUCLEAR INSTRUMENTS & METHODS IN PHYSICS RESEARCH, SECTION - A: ACCELERATORS, SPECTROMETERS, DETECTORS AND ASSOCIATED EQUIPMENT, NORTH-HOLLAND PUBLISHING COMPANY. AMSTERDAM, NL, vol. 505, no. 1-2, 1 June 2003 (2003-06-01), pages 256-264, XP004429115 ISSN: 0168-9002 * page 257, line 28 - page 258, line 2 * * page 265, line 15 - line 33 * ----- | 1-15 | G01T1/24 |
| X | HALL C J ET AL: "A gamma-ray tracking detector for molecular imaging" NUCLEAR INSTRUMENTS & METHODS IN PHYSICS RESEARCH, SECTION - A: ACCELERATORS, SPECTROMETERS, DETECTORS AND ASSOCIATED EQUIPMENT, NORTH-HOLLAND PUBLISHING COMPANY. AMSTERDAM, NL, vol. 510, no. 1-2, 1 September 2003 (2003-09-01), pages 116-121, XP004450953 ISSN: 0168-9002 * page 120 - page 121 * ----- | 1,4,7,8, 15 | |
| X | US 6 333 504 B1 (LINGREN CLINTON L ET AL) 25 December 2001 (2001-12-25) * column 19, line 26 - line 44 * * column 22, line 42 - line 63 * ----- -/-- | 1-7 | TECHNICAL FIELDS SEARCHED (Int.Cl.7) G01T H01L |

The present search report has been drawn up for all claims

| Place of search | Date of completion of the search | Examiner |
|---|---|---|
| Munich | 24 March 2005 | Rabenstein, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 548 465 A1**

**European Patent Office**

**EUROPEAN SEARCH REPORT**

Application Number

EP 04 09 0513

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PHLIPS B F ET AL: "Development of germanium strip detectors for environmental remediation" NUCLEAR SCIENCE SYMPOSIUM CONFERENCE RECORD, 2000 IEEE LYON, FRANCE 15-20 OCT. 2000, PISCATAWAY, NJ, USA,IEEE, US, vol. 1, 15 October 2000 (2000-10-15), pages 4-72, XP010556442 ISBN: 0-7803-6503-8 * pages 4-75 * | 1-3,7 | |
| D,A | SINGH M: "An electronically collimated gamma camera for single photon emission computed tomography. I. Theoretical considerations and design criteria" MEDICAL PHYSICS USA, vol. 10, no. 4, August 1983 (1983-08), pages 421-427, XP009045206 ISSN: 0094-2405 * the whole document * | 1,4,8 | |

| | | | TECHNICAL FIELDS SEARCHED (Int.Cl.7) |
|---|---|---|---|

The present search report has been drawn up for all claims

| Place of search | Date of completion of the search | Examiner |
|---|---|---|
| Munich | 24 March 2005 | Rabenstein, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

26

**ANNEX TO THE EUROPEAN SEARCH REPORT
ON EUROPEAN PATENT APPLICATION NO.**

EP 04 09 0513

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2005

| Patent document cited in search report | Publication date | Patent family member(s) | Publication date |
|---|---|---|---|
| US 6333504 B1 | 25-12-2001 | US 6046454 A | 04-04-2000 |
| | | US 5677539 A | 14-10-1997 |
| | | US 2002079456 A1 | 27-06-2002 |
| | | US 6037595 A | 14-03-2000 |
| | | US 6002134 A | 14-12-1999 |
| | | AU 7255596 A | 30-04-1997 |
| | | CA 2234684 A1 | 17-04-1997 |
| | | CN 1203669 A | 30-12-1998 |
| | | EP 0937266 A1 | 25-08-1999 |
| | | JP 10512372 T | 24-11-1998 |
| | | JP 3093799 B2 | 03-10-2000 |
| | | KR 264312 B1 | 16-08-2000 |
| | | WO 9714060 A1 | 17-04-1997 |

EPO FORM P0459

For more details about this annex : see Official Journal of the European Patent Office, No. 12/82